# EUROPEAN PATENT APPLICATION

(11) **EP 1 320 051 A1**
(43) Date of publication of application: **18.06.2003**
(21) Application number: 01310344.5
(22) Date of filing: 11.12.2001
(51) Int. Cl.: G06F 17/60

(54) **Method and apparatus for transmission of monetary value and the payment of debts**

(71) Applicant: Weber, Juergen, Uxbridge, Ontario, L9P 1R4 (CA)
(72) Inventor: Weber, Juergen, Uxbridge, Ontario, L9P 1R4 (CA)
(74) Representative: Hale, Peter

(57) **Abstract**

A method is disclosed for carrying out a monetary transaction involving a financial institution, a consumer and a merchant. Possession of an instrument including alphanumeric coding is transferred from a financial institution to a consumer, the coding being unique to each card and representing a monetary amount transferred by said financial institution into an account accessible by the holder of the instrument. The consumer presents the instrument to the merchant in satisfaction of a debt owed by the consumer to the merchant in respect of a purchase or the like by the consumer from the merchant. Then the instrument is presented by the merchant to the financial institution with a requisition of transfer of a monetary amount from the account to the merchant. The monetary amount is then transferred from the account to the merchant by the financial institution, and the account debited accordingly. Lastly, the instrument is returned to the consumer, for use of the remaining monetary balance in the account.

## Description

The present invention related to the field of commercial transactions, and apparatus to facilitate the transfer of funds. The present invention is particularly suited to use in internet commerce.

There currently exists a need for a simple and secure method of effecting payment for goods or services that are purchased over the internet. Currently, most transactions conducted over the internet utilize credit cards. However, because of the legitimate concern that some merchants or employees of merchants may not be honest, many persons are reluctant to provide credit card information over the internet. Moreover, by providing such information to a merchant, the individual must trust the security of the merchant's site against hackers. Virtual cash, or e-money has been proposed by many different sources as a solution to the problem of security of transactions. Under such a system, a person can authorize, on line, the transfer of money from a bank account to a virtual cash account with service provider. The cash in that account is then spent until depleted. That system has the advantage of not exposing large sums of money to risk - assuming that money in a bank and accessible on line Is not at risk, a fairly safe assumption - but nonetheless, an essential element of the system is access to a bank account or credit card account on line for withdrawal, so some risk is present. Moreover, such a system cannot be used off line, for instance, at a restaurant or a shop.

Pre-loaded "smart" cards, with tamper proof observer chips therein, that can accurately keep track of the amount of money loaded on the card are effective for use off-line, but require special apparatus for reading and updating.

Debit cards are not used on line, since a break down in security would expose the entire contents of a user's account to risk.

The present invention addresses each and every one of the foregoing problems, by providing a card of the traditional credit card size and shape that can be used off-line like a credit or debit card, and on-line like virtual money. Account information is not maintained on or in the card, but at a banking or other financial institution, where a running balance of money on the card and available to be spent is kept. The card of the present invention is moreover, completely anonymous, and so is capable of acquisition without proof of identity, and is fully transferable.

In a broad aspect, therefore, the present invention relates to a method for carrying out a monetary transaction involving a financial institution, a consumer and a merchant, comprising the steps of: (i) transferring possession of an instrument including alphanumeric coding from a said financial institution to a said consumer, said coding being unique to each said card and representing a monetary amount transferred by said financial institution into an account accessible by the holder of said instrument; (ii) presentation of said consumer of said instrument to said merchant in satisfaction of a debt owed by said consumer to said merchant in respect of a purchase or the like by said consumer from said merchant; (iii) presentation of said instrument by said merchant to said financial institution, and requisition of transfer of a monetary amount from said account to said merchant; (iv) transfer of a said monetary amount from said account to said merchant by said financial institution, and consequent debiting of said account; and (v) return of said instrument to said consumer, for expenditure of the remaining monetary balance in said account.

### In drawings that Illustrate the present invention by way of example:

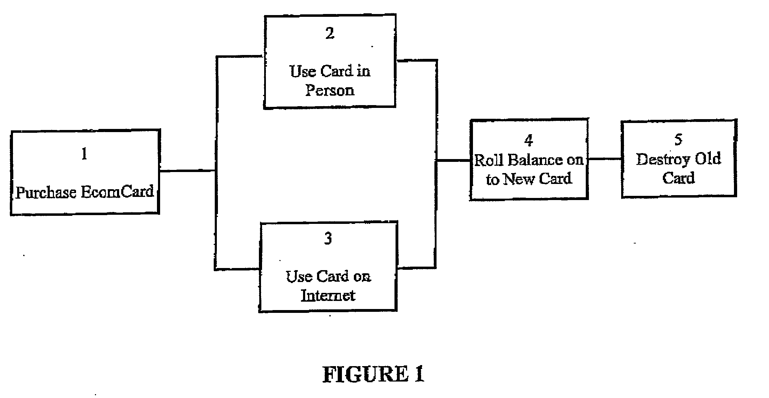

Figure 1 is a flow chart illustrating use of the card of the present invention.

Referring now to the drawings, the payment card of the present invention is utilized as follows:
1. A consumer attends at the premises of a bank or other financial institution and purchases, for cash, credit or transfer a card (e.g., an ECOMCARD™) pursuant to the present invention. The card is of either a pre-set value, or any value desired by the consumer, depending on how much is paid for the card. It is also anticipated that the card of the present invention would also be available for purchase at merchants in pre-set or desired amounts. Financial records relating to each card purchased, including the serial number of the card and the value of same, are maintained by the issuing financial institution by conventional means. The card of the present invention is preferably provided with a unique multiple digit serial number that identifies a particular account, there being one account for each card, and a personal identification number which may if desired be an expiry date (thereby permitting financial institutions to close inactive accounts after a period of time, which would require a holder of an expired card to redeem it at a bank) but may be any identifying string of numbers. The use of two sets of numbers to identify a card prevents a person from fraudulently attempting to use a card number that they are not authorized to use. That is, while anyone can simply make up a multiple digit number, they would not have any way of knowing the personal identifier that went with it, The card is also provided with a conventional magnetic strip for storing data, and an additional multidigit personal identification number may be included.
2. The card is then used, in person in the same manner as a credit card but without the need for a signature; or
3. The card is used over the internet using the serial number and the personal identification number. In either event, no transaction is completed until the seller contacts the card issuer and verifies the balance on the card is sufficient, and a transfer of the appropriate amount is completed.
4. When only a small amount is left on the card, it is brought to a card issuer and redeemed for cash, or used toward the purchase of a new card.
5. The old card is then destroyed and is not reloaded. This feature prevents the re-use of old serial numbers, and ensures that information on each account balance is always current and accurate. A balance of say, $50.00 could not possibly actually be $75.00, because once an account is opened by the purchase of a card, money can only ever come out of the account. Moreover, if an unscrupulous merchant should, by learning a serial number and its accompanying personal identity, try to use a card number in an unauthorized way to make a purchase, the most they could steal would be the balance left on the card.

In view of the foregoing, it will be seen that the present invention provides a safe and secure method and apparatus for the electronic transfer of funds, that exposes a consumer to a minimum of risk, and provides a maximum of convenience.

It is to be understood that the examples described above are not meant to limit the scope of the present invention. It is expected that numerous variants will be obvious to the person skilled in the field of electronic funds transfer without any departure from the spirit of the invention. The appended claims, properly construed, form the only limitation upon the scope of the invention.

## Claims

1. A method for carrying out a monetary transaction involving a financial institution, a consumer and a merchant, comprising the steps of:
i) transferring possession of an instrument including alphanumeric coding from a said financial institution to a said consumer, said coding being unique to each said card and representing a monetary amount transferred by said financial institution into an account accessible by the holder of said instrument;
ii) presentation of said consumer of said instrument to said merchant in satisfaction of a debt owed by said consumer to said merchant in respect of a purchase or the like by said consumer from said merchant;
iii) presentation of said instrument by said merchant to said financial institution, and requisition of transfer of a monetary amount from said account to said merchant;
iv) transfer of a said monetary amount from said account to said merchant by said financial institution, and consequent debiting of said account;
v) return of said instrument to said consumer, for use of the remaining monetary balance in said account.

2. The method of claim 1, wherein said instrument is a card conveniently sized to fit in a wallet.

3. The method of claim 1, wherein said alphanumeric coding is a multidigit serial number, and an identification number.

4. The method of claim 3, wherein said card includes a magnetic strip for encoding of the said alphanumeric coding.

5. The method of claim 1, 2, 3 or 4, wherein said account, once opened by said institution at a particular amount, cannot have further money deposited in it.

6. An alphanumeric encoded card for use in the method of claim 1, 2, 3, 4 or 5.
